# EUROPEAN PATENT APPLICATION

(11) **EP 4 286 250 A1**
(43) Date of publication of application: **06.12.2023**
(21) Application number: 22745789.2
(22) Date of filing: 24.01.2022
(51) Int. Cl.: B62D 7/09, B62D 5/04, B60B 35/14

(54) **HUB UNIT WITH STEERING FUNCTION, STEERING SYSTEM, AND VEHICLE**

(30) Priority: 27.01.2021 JP 2021011498
(71) Applicant: NTN Corporation, Osaka-shi, Osaka 550-0003 (JP)
(72) Inventor: OOBA, Hirokazu, Iwata-shi, Shizuoka 438-8510 (JP); OHATA, Yusuke, Iwata-shi, Shizuoka 438-8510 (JP)
(74) Representative: Maikowski & Ninnemann Patentanwälte Partnerschaft mbB
(86) International application number: PCT/JP2022/002367
(87) International publication number: WO 2022/163568

(57) **Abstract**

Provided is a hub unit (1) with a steering function. The hub unit (1) includes a hub bearing assembly (3) including a hub bearing (21) configured to rotatably support a wheel (13) of a vehicle (11), a unit support member (5) configured to be coupled to a suspension system (33) and supporting the hub bearing assembly (3), and a rotation-permitting support member (7) rotatably supporting the hub bearing assembly (3), about a turning axis (A) that extends in a vertical direction, on the unit support member (5). The hub bearing (21) is configured to be coupled with a driveshaft (53) that transmits drive power from a drive source of the vehicle (11).

## Description

### CROSS REFERENCE TO THE RELATED APPLICATION

This application is based on and claims Convention priority to Japanese patent application No. 2021-011498, filed January 27, 2021, the entire disclosure of which is herein incorporated by reference as a part of this application.

### BACKGROUND OF THE INVENTION

### (Field of the Invention)

The present invention relates to a hub unit with a steering function, a steering system comprising the hub unit with a steering function, and a vehicle to which the hub unit with a steering function or the steering system is installed.

### (Description of Related Art)

In a typical vehicle, a steering wheel is mechanically coupled to a steering assembly which, in turn, has an end, on each side thereof, connecting to a left or right wheel through a tie rod. Hence, the initial setup (or steering geometry) dictates the steering angle of each of the left and right wheels that is produced through the operation of the steering wheel.

Known vehicle steering geometries include: (i) a "parallel geometry" in which the steering angles of the left and right wheels are identical; and (ii) an "Ackerman geometry" in which the inside wheel is steered by a tire turning angle greater than that of the outside wheel in order to define a single turn center.

In an Ackerman geometry, the steering angle difference between the left and right wheels is selected such that both wheels can make a turn about the single identical center, to thereby facilitate smooth turn travel of the vehicle in a low-velocity regime where a centrifugal force is negligible. Yet, a parallel geometry is preferred over an Ackerman geometry during turning in a high-velocity regime where a centrifugal force is not negligible, since it is desired that a cornering force be generated by wheels in such a direction that balances out the centrifugal force.

In a typical vehicle, since a steering assembly is mechanically coupled to wheels in an abovementioned manner, a single, fixed steering geometry can normally be taken. Hence, a geometry that is intermediate between an Ackerman geometry and a parallel geometry is often selected. However, this results in an insufficient difference in a steering angle between left and right wheels and leads to an excessive steering angle for the outside wheel in a low-velocity regime. On the other hand, an excessive steering angle is produced for the inside wheel in a high-velocity regime. Such an unwanted unevenness in the distribution of a tire lateral force among the inside and outside wheels can lead to a poor fuel economy caused by an increased running resistance, as well as premature wears of tires. Furthermore, the inefficient use of the inside and outside wheels leads to issues like loss of smoothness during cornering.

As can be seen from the above, the steering geometry of a vehicle has an impact on the driving stability and safety of the vehicle. Designs with a steering geometry which is variable as a function of the travelling conditions of a vehicle are proposed in, for example, Patent Documents 1 and 2. In Patent Document 1, the positions of an arm of a unit support member and a joint assembly are relatively changed to effect a change in a steering geometry. In Patent Document 2, two motors are used to enable each of a toe angle and a camber angle to be tilted to a desired angle. Moreover, a design for four-wheel independent steering is proposed in Patent Document 3.

### [Related Document]

### [Patent Document]

[Patent Document 1] JP Laid-open Patent Publication No. 2009-226972
[Patent Document 2] DE102012206337
[Patent Document 3] JP Laid-open Patent Publication No. 2014-061744

### SUMMARY OF THE INVENTION

As is proposed in these documents, smooth turning at low velocities and cornering performance at high velocities can be simultaneously achieved without accompanying an increase in the running resistance of a vehicle, by making changes to the steering angle of a wheel as a function of a vehicle velocity and/or a turning acceleration during driving in such a way to select, as appropriate, an Ackerman geometry in a low-velocity regime and a parallel geometry in a high-velocity regime.

In Patent Document 1, the positions of an arm of a unit support member and a joint assembly are relatively changed to effect a change in a steering geometry. However, the provision, in this local region, of an actuator that can produce a power high enough to effect a change in a vehicle geometry poses a considerable challenge, given the spatial constraints. Further, a change brought about at this location leads to a limited shift in a tire angle. To produce the same effect in a greater magnitude, the displacement produced by an actuator must be increased because a more significant change is required in the vehicle geometry.

In Patent Document 2, two motors are used to enable each of a toe angle and a camber angle to be tilted to a desired angle. This, however, requires the implementation of more complex control. Further, a hub bearing assembly is supported by a spherical ball bearing with a large diameter which thereby increases the weight of a system.

In Patent Document 3, a hub bearing is supported in a cantilevered fashion on a turning shaft. This results in a poor rigidity with the possibility of an acceleration that occurs during driving altering a steering geometry.

Moreover, as is the case with each of the above examples, changing the toe angle or camber angle of a tire to a given desired level necessitates the provision of a complex structure with a large number of parts in a vehicle. This makes it difficult to ensure rigidity of the system as whole, and ensuring rigidity requires an increase in size and thereby means more dimensions and weight of the system.

Therefore, to overcome the abovementioned drawbacks, an object of the present invention is to improve the dynamic performance of a vehicle to promote more stable travel of the vehicle, and to provide for an enhanced rigidity and thereby achieve an improved reliability with a minimal increase in size and weight of a hub unit as a whole.

To achieve the above object, the present invention provides a hub unit with a steering function, which includes:
a hub bearing assembly including a hub bearing configured to rotatably support a wheel of a vehicle, a wheel hub of the hub bearing being configured to be coupled with a driveshaft that transmits drive power from a drive source of the vehicle;
a unit support member configured to be coupled to a suspension system and supporting the hub bearing assembly; and
a rotation-permitting support member rotatably supporting the hub bearing assembly, about a turning axis that extends in a vertical direction, on the unit support member.

According to such a configuration, a hub bearing assembly that provides support of a wheel is supported in a rotatable manner about a turning axis that extends in a vertical direction. This allows independent steering of a left or right wheel to be performed as a function of the travelling conditions of a vehicle during driving to thereby improve the dynamic performance of the vehicle. On top of that, drive power from a drive source (i.e., an engine or a drive motor) of the vehicle can be transmitted through a driveshaft to thereby further improve the dynamic performance of the vehicle. In this way, particularly stable driving can be achieved along with an improved fuel economy.

Moreover, despite a structural complication of the hub unit due to steering control that can be effected at the hub bearing assembly and integration of the driveshaft 53, a successful increase in the rigidity of the unit as a whole is achieved through the mounting of the hub bearing assembly to the unit support member having a high rigidity.

In the hub unit with a steering function according to an embodiment of the present invention, the unit support member may have a through hole formed therein to pass the driveshaft therethrough. According to such a configuration, a structural complication and a dimensional and weight increase from the integration of the driveshaft to the hub unit can be minimized. Further, this can provide for an enhanced rigidity and thereby achieve an improved reliability with a minimal increase in size and weight of the hub unit as a whole.

In the hub unit with a steering function according to an embodiment of the present invention, the unit support member may have an inboard, mounting surface, and the hub unit may be configured such that a joint center for the driveshaft is positioned on an outboard side with respect to that inboard, mounting surface. According to such a configuration, the range of pivoting motion required in the execution of given steering can be kept small, thereby allowing for a compact design.

The hub unit with a steering function according to an embodiment of the present invention may further include a steering actuator assembly configured to cause rotation of the hub bearing assembly about the turning axis. Such a configuration in which the hub unit is equipped with a steering actuator assembly allows for a more compact design. Further, in such a configuration, the steering actuator assembly may be mounted to the unit support member. By adopting this configuration, no sacrifice needs to be made in the rigidity of the unit as a whole. Nevertheless, the steering actuator assembly may be configured to be mounted to the suspension system or a chassis of the vehicle for a more efficient use of a space, in situations where there is not an adequate space available around a wheel, for example.

In the hub unit with a steering function according to an embodiment of the present invention, the steering actuator assembly may be configured to be shared among two hub units with a steering function, each provided for a respective one of left and right wheels of the vehicle. Such a configuration results in a fewer parts count, thereby being able to lower the weight and cost of the vehicle.

The present invention provides a steering system which includes:
the hub unit with a steering function; and
a control device configured to control the steering actuator assembly, the control device including a controller configured to generate a current command signal as a function of a given steering angle command signal and an actuator driver configured to generate a current as a function of the current command signal that is generated and output from the controller, to drive the steering actuator assembly.

According to a system having such a configuration, the controller generates a current command signal as a function of a steering angle command signal given from, for example, a superordinate control unit, while the actuator driver generates a current as a function of the current command signal that is generated and output from the controller, to controllably drive the rolling actuator. Hence, changes can be made to the steering angle of a wheel as desired in a supplementary manner to steering of the same wheel through the operation of a steering input by a driver.

The present invention provides a vehicle which includes the hub unit with a steering function or the steering system, the hub unit or the steering system being installed for left and right front wheels and/or left and right rear wheels of the vehicle.

According to a vehicle having such a configuration, various effects and advantages discussed above with respect to the hub unit with a steering function or the steering system can be achieved. When applied to a drive wheel, which is typically a front wheel, a hub unit with a steering function according to the present invention is effective in making adjustments to the toe angle of the wheel during driving. Further, when applied to a driven wheel, which is typically a rear wheel, a hub unit with a steering function according to the present invention can be used to shorten the minimum turn radius during driving at low velocities through slight steering of the driven wheel. When applied to front and rear wheels, such hub units with a steering function are effective in making adjustments to the toe angles of the wheels during driving while at the same time being able to shorten the minimum turn radius during driving at low velocities.

Any combinations of at least two features disclosed in the claims and/or the specification and/or the drawings should also be construed as encompassed by the present invention. Especially, any combinations of two or more of the claims should also be construed as encompassed by the present invention.

### BRIEF DESCRIPTION OF THE DRAWINGS

The present invention will be more clearly understood from the following description of preferred embodiments made by referring to the accompanying drawings. However, the embodiments and the drawings are given merely for the purpose of illustration and explanation, and should not be used to delimit the scope of the present invention, which scope is to be delimited by the appended claims. In the accompanying drawings, alike symbols indicate alike or corresponding parts throughout the different figures, and:
Fig. 1 shows a perspective view of a hub unit with a steering function as viewed from an outboard side, in accordance with an embodiment of the present invention;
Fig. 2 shows a plan view that schematically illustrates an example vehicle installed with hub units with a steering function, in accordance with an embodiment of the present invention;
Fig. 3 shows a vertical cross sectional view of the hub unit with a steering function of Fig. 1;
Fig. 4 shows a perspective view of the hub unit with a steering function of Fig. 1 and a steering system in accordance with an embodiment of the present invention, as viewed from an inboard side;
Fig. 5A shows a cross sectional view along the line VA-VA of Fig. 3; and
Fig. 5B shows a cross sectional view of the hub unit with a steering function of Fig. 5A in a steered state.

### DESCRIPTION OF EMBODIMENTS

A description will be made below of a non-limiting embodiment of the present invention in a conjunction with the drawings.

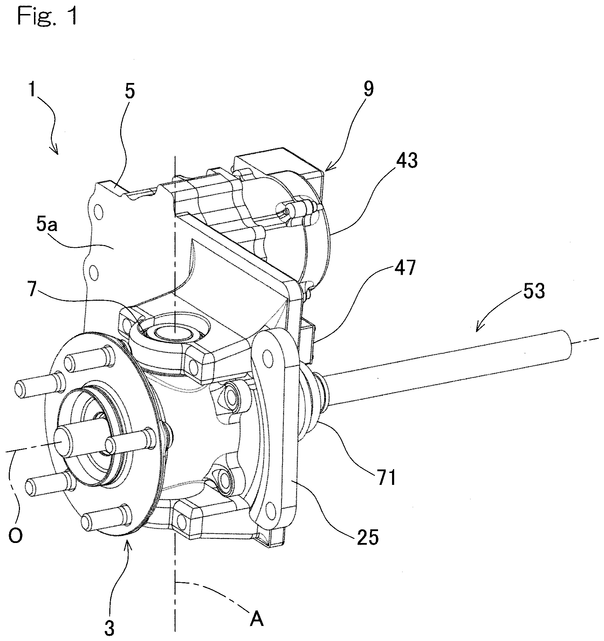

Fig. 1 depicts a hub unit with a steering function (which will hereinafter be referred to simply as a "hub unit") 1 in accordance with an embodiment of the present invention. The hub unit 1 includes a hub bearing assembly 3, a unit support member 5, and rotation-permitting support members 7. In the instant embodiment, the hub unit 1 further includes a steering actuator assembly 9.

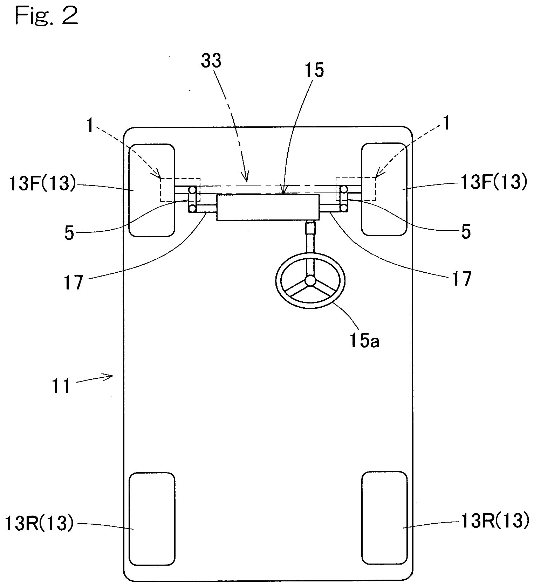

The hub unit 1 not only provides rotatable support of a corresponding wheel 13 of a vehicle 11 as shown in Fig. 2 but also is used to perform independent steering of a left or right, drive wheel (which is, in the instant embodiment, a front wheel 13F) of the vehicle 11 by a slight angle (e.g., within about ±5°) in a supplementary and auxiliary manner to steering of the wheel through a steering assembly 15 of the vehicle 11. Such a hub unit 1 may even steer the left or right wheel independently by a relatively large angle of, for example, 10° to 20° in addition to the abovementioned slight angle, if required by the vehicle control.

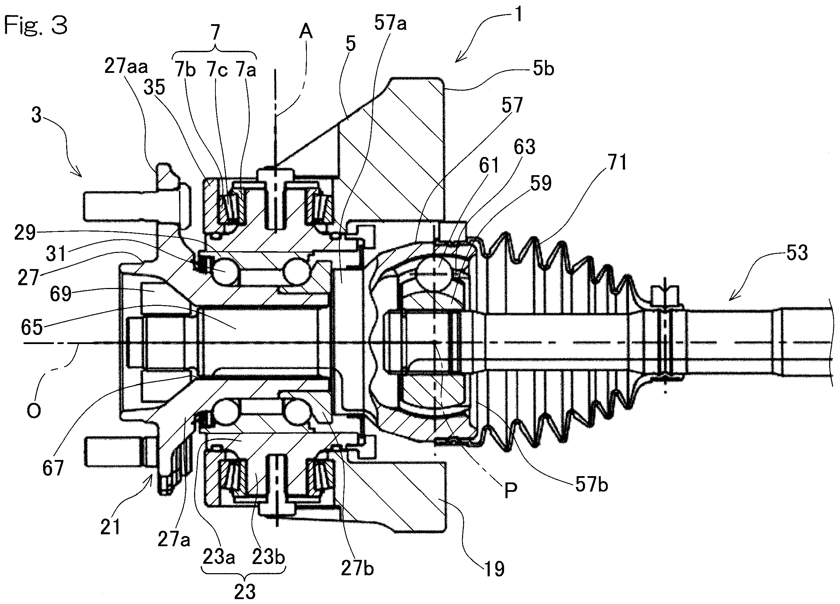

The steering assembly 15 is actuated through the operation of a steering input (which is, in the instant example, a steering wheel) 15a by a driver or in response to commands from an autonomous driving system or a driving assistance system (both not shown), for example. The steering assembly 15 includes a tie rod 17 which connects to a steering connection 19 (Fig. 3) located at the unit support member 5. The operation of the steering input 15a is transmitted in the form of the extension or retraction of the tie rod 17 to the wheel 13. The steering assembly 15 is, for example, of a rack and pinion design. Nevertheless, the steering assembly 15 can be of any type of design.

As depicted in Fig. 3, the hub bearing assembly 3 includes a hub bearing 21 that rotatably supports the wheel 13 (Fig. 2) of the vehicle 11 about an axis O of rotation. More specifically, the hub bearing assembly 3 in the illustrated example includes the hub bearing 21, an outer ring 23, and a brake caliper mount 25. These members of the hub bearing assembly 3 are integrally assembled into a single assembly component and configured to be steered as a unit.

The hub bearing 21 includes an inner race 27 in the form of a rotational race that also serves as a wheel hub, an outer race 29 in the form of a stationary race, and rolling elements 31 in the form of, for example balls, interposed between the inner race 27 and the outer race 29. The hub bearing 21 provides a connection between members on the side of a vehicle body and the wheel 13 and serves the function of facilitating smooth rotations of the wheel 13. The inner race 27 includes a wheel hub component 27a and an inner race component 27b. The wheel hub component 27a has a hub flange 27aa and forms an outboard raceway surface. The inner race component 27b is fitted to the outer peripheral surface of the wheel hub component 27a at an inboard end thereof and forms an inboard raceway surface. The wheel 13 is mounted to the hub flange 27aa of the wheel hub component 27a.

The unit support member 5 is coupled to a suspension system 33 of the vehicle 11, as shown in Fig. 2, to provide support of the hub bearing assembly 3. In the instant embodiment, a knuckle which is to be coupled to the suspension system 33 is used as the unit support member 5. In the illustrate example, the suspension system 33 is a strut suspension mechanism. Nevertheless, the suspension system 33 can be a different type of suspension mechanism such as a multilink suspension mechanism. As with a typical vehicle, a kingpin axis defines an angle that is set to a value in the range of 10° to 20° with the aim of improving the straight-line stability of the vehicle during driving. In the instant embodiment, the hub unit 1 defines a turning axis A, as shown in Fig. 1, that defines an angle (or an axis) which is different from the kingpin axis and with which changes can be made to the angle of the hub bearing assembly 3 relative to the unit support member 5 during driving, as desired, through the steering actuator assembly 9.

As depicted in Fig. 3, the outer ring 23 of the hub bearing assembly 3 is in the form of an annular component located at radially outward of the hub bearing 21. The outer ring 23 includes an annular part 23a fitted onto the outer peripheral surface of the outer race 29 of the hub bearing 21, and mount shaft parts 23b shaped like trunnion shafts and provided in a manner that protrudes upwards and downwards from the outer periphery of the annular part 23a. Each of the mount shaft parts 23b is positioned coaxial to the turning axis A. Note that, while the outer ring 23 and the outer race 29 are constructed as distinct pieces in the instant example, they may, alternatively, be constructed in one piece.

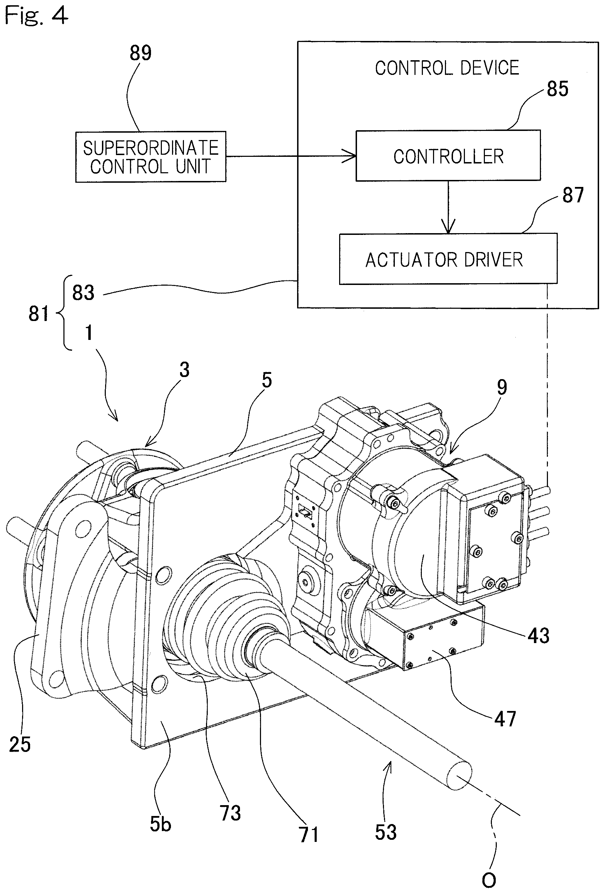

As depicted in Fig. 1, the unit support member 5 is constructed to be a planar member. In the instant embodiment, the steering actuator assembly 9 is mounted to the unit support member 5 as well. Each of the hub bearing assembly 3 and the steering actuator assembly 9 is mounted to a respective one of mounting surfaces of the unit support member 5 on opposite sides of the unit support member 5. Specifically, the hub bearing assembly 3 is disposed on an outboard, mounting surface 5a of the unit support member 5 so as to protrude therefrom on an outboard side of the unit support member 5. On the other hand, the steering actuator assembly 9 is disposed on an inboard, mounting surface 5b of the unit support member 5 so as to protrude therefrom on an inboard side of the unit support member 5, as shown in Fig. 4.

It should be noted that, herein, in an installed position of the hub unit 1 to the vehicle 11 as shown in Fig. 2, an exterior side of the vehicle 11 in a widthwise direction thereof refers to an outboard side, while a central side of the vehicle 11 in a widthwise direction thereof refers to an inboard side.

The rotation-permitting support members 7 shown in Fig. 3 rotatably support the hub bearing assembly 3, about the turning axis A that extends in a vertical direction, on the unit support member 5. Specifically, the hub bearing assembly 3 is disposed on the unit support member 5 with the interposition of the rotation-permitting support members 7 at two locations in a vertical direction, so as to be able to rotate about the turning axis A that extends in a vertical direction. The steering actuator assembly 9 causes rotations of the hub bearing assembly 3 about the turning axis A.

The rotation-permitting support members 7 are constructed to be rolling bearings. Such a rotation-permitting support member 7 in the form of a rolling bearing, as shown in Fig. 3, includes an inner race 7a, an outer race 7b, and a double row of rolling elements 7c interposed between the inner race 7a and the outer race 7b. The inner race 7a is positioned in place by being fitted to the outer periphery of a respective one of the mount shaft parts 23b located on the outer ring 23. The outer race 29 is positioned in fitted engagement with a respective one of bearing fitting sections 35 provided in the unit support member 5.

In the instant example, a tapered roller bearing is used for such a rotation-permitting support member 7 in the form of a rolling bearing. Nevertheless, an angular-contact ball bearing, etc. may, alternatively, be used therefor, depending on usage conditions such as a maximum load, because a tapered roller bearing is one of non-limiting examples of a rotation-permitting support member 7. Moreover, a sliding bearing, such as in the form of a spherical bearing, may even be used for such a rotation-permitting support member 7, as an alternative to a rolling bearing.

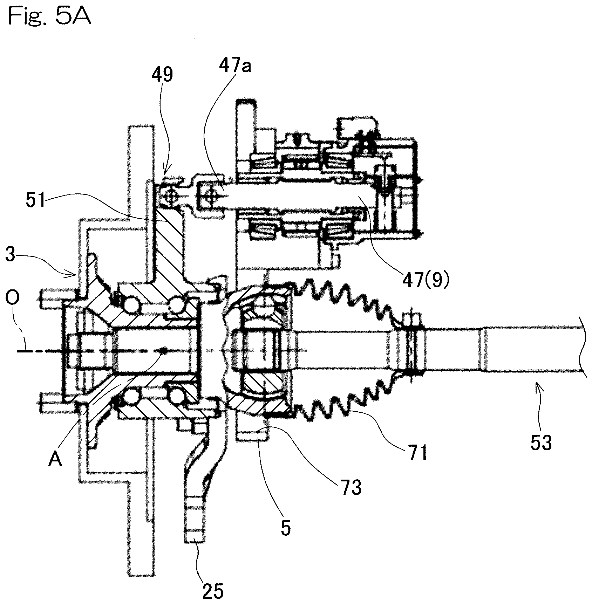

As depicted in Fig. 4, the steering actuator assembly 9 includes a motor 43 and a linear drive mechanism 47. The linear drive mechanism 47 converts rotations from the motor 43 - namely, a rotational output in positive and negative directions from the motor - to a back-and-forth, linear motion. The motor 43 and the linear drive mechanism 47 are coupled through a speed reducer (not shown). The speed reducer reduces the speed of the rotational output from the motor 43 before further transmission thereof. A permanent magnet synchronous motor is used in a non-limiting manner for the motor 43 in the instant example; a DC motor or an induction motor may, alternatively, be used therefor, by way of example. For the linear drive mechanism 47, a lead screw mechanism such as a slide screw or a ball screw, or a rack and pinion mechanism can be used, for instance. In the instant example, a lead screw mechanism which employs a slide screw in the form of a trapezoidal screw is used for the linear drive mechanism 47. The back-and-forth, linear motion of the linear drive mechanism 47 is output through a linear drive output 47a thereof as shown in Fig. 5A.

The hub bearing assembly 3 and the steering actuator assembly 9 are operatively coupled to each other, exclusively through a joint assembly 49 that transmits the motion of the steering actuator assembly 9 to the hub bearing assembly 3. The outer ring 23 of the hub bearing assembly 3 has an arm section 51 that is located on a portion of the outer periphery thereof in a protruding fashion and in an integral manner therewith. The arm section 51 is pivotably coupled to the linear drive output 47a of the steering actuator assembly 9. The arm section 51 of the hub bearing assembly 3 and the linear drive output 47a of the steering actuator form the aforementioned joint assembly 49. Via such a coupling mechanism, the extension or retraction of the linear drive output 47a of the steering actuator assembly 9 causes the steering of the hub bearing assembly 3 about the turning axis A.

As depicted in Fig. 3, in the instant embodiment having such a configuration, the hub bearing 21 of the hub unit 1 is coupled with a driveshaft 53 that transmits drive power from a drive source of the vehicle such as an engine or a drive motor. In the instant example, the hub bearing 21 is coupled with the driveshaft 53 through a constant velocity joint 55, which is one of the components of the driveshaft 53.

In the illustrated example, the constant velocity joint 55 is constructed to be a fixed-type, constant velocity ball joint. Specifically, the constant velocity joint 55 includes an outer race (which will hereinafter be referred to as a "joint outer race") 57 having a spherical, inner surface, an inner race (which will hereinafter be referred to as a "joint inner race") 59 incorporated to the interior of the joint outer race 57 and having a spherical, outer surface, and a plurality of balls 61 rollingly incorporated between the joint outer race 57 and the joint inner race 59. Each of the balls 61 is incorporated so as to be rollable along a track groove formed in the spherical, inner surface of the joint outer race 57 and a track groove formed in the spherical, outer surface of the joint inner race 59. Inserted between the joint outer race 57 and the joint inner race 59 is a cage 63 having a plurality of pockets formed therein at regular intervals in a circumferential direction. Each of the balls 61 is retained in a respective one of the pockets of the cage 63.

Meanwhile, the joint outer race 57 has a closure end 57a that is coupled to the inner race 27 of the hub bearing 21 in a position coaxial with the hub bearing 21. Specifically, the closure end 57a of the joint outer race 57 has a stem 65 provided in a protruding manner therefrom. The stem 65 is inserted into a stem insertion bore 67 from an inboard side thereof, with the stem insertion bore 67 being in the form of an axial through bore formed in the inner race 27 in a center thereof in a radial direction thereof. The stem 65 and the stem insertion bore 67 are coupled to each other through serration fitting so as to prevent rotations relative to each other. Further, at an outboard, open end of the inner race 27, a nut 69 is threaded onto a threading formed on a free end portion of the stem 65. The nut 69 is tightened to clamp the inner race 27 of the hub bearing 21 in an axial direction between the nut 69 and the closure end 57a of the joint outer race 57. In this manner, the constant velocity joint 55 provides a coupling between the hub bearing 21 and the drive shaft 53.

The joint outer race 57 has an open end 57b that is closed by a boot 71 attached thereto. The boot 71 prevents leakage of grease enclosed within the constant velocity joint and ingress of foreign matters into the constant velocity joint 55.

Further, in the instant embodiment, the unit support member 5 has a through hole 73 formed therein to pass the driveshaft 53 therethrough. The driveshaft 53 passes through the through bore 73 to be coupled to the hub bearing assembly 3 of the hub unit 1. According to such a configuration, a structural complication and a dimensional and weight increase from the integration of the driveshaft 53 to the hub unit 1 can be minimized. Further, this can provide for an enhanced rigidity and thereby achieve an improved reliability with a minimal increase in size and weight of the hub unit 1 as a whole.

In the instant embodiment, a joint center P of the constant velocity joint 55 for the driveshaft 53 is positioned on an outboard side with respect to the inboard, mounting surface 5b of the unit support member 5. According to such a configuration, the range of pivoting motion required in the execution of given steering can be kept small, thereby allowing for a compact design. Nevertheless, the joint center P of the constant velocity joint 55 may be positioned on an inboard side with respect to the inboard, mounting surface 5b of the unit support member 5.

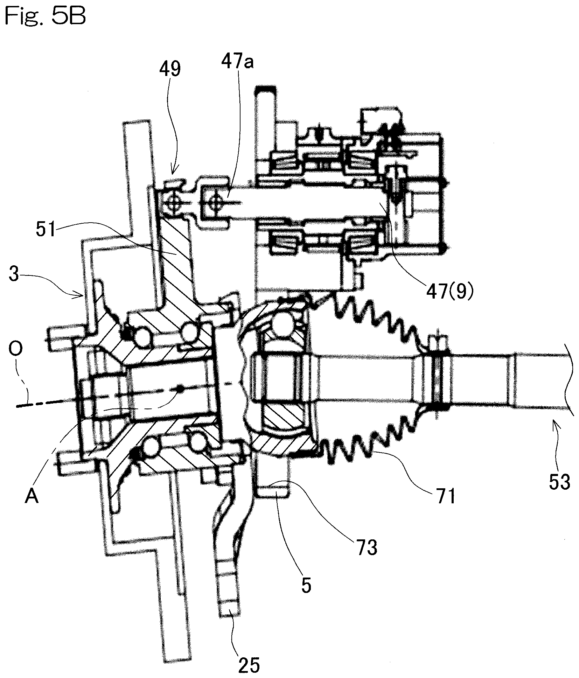

It should be noted that, as depicted in Fig. 5B, the driveshaft 53 is positioned such that it does not contact the actuator assembly 9 even in a steered state of the hub unit 1 by a maximum steering angle (which is, in the illustrated example, 5°).

Next, a steering system 81 in accordance with an embodiment of the present invention will be described. As depicted in Fig. 4, the steering system 81 includes the hub unit 1 discussed above, and a control device 83 that controls the steering actuator assembly 9. In the illustrated example, the control device 83 includes a controller 85 and an actuator driver 87.

The controller 85 includes the controller 85 and the actuator driver 87. The controller 85 generates a current command signal S2 as a function of a given steering angle command signal S 1. The actuator driver 87 generates a current as a function of the current command signal S2 that is generated and output from the controller 85, to drive the steering actuator assembly 9.

A driver controls the steering angle of the wheel 13 by using the steering input 15a such as a steering wheel. A superordinate control unit 89 located on the vehicle 11 takes into account the steering angle that is entered via the steering input 15a as well as parameters such as given conditions of the vehicle 11 to calculate and send such a steering angle command signal S1 for left and right wheels to the controller 85. The superordinate control unit 89 is a control unit superordinate to the controller 85. For instance, a vehicle control unit (which is, in short, a VCU) that implements general control of the vehicle can be used for the superordinate control unit 89.

The controller 85 sends, to the actuator driver 87, the current command signal S2 as a function of the steering angle command signal S 1 given from the superordinate control unit 89. The actuator driver 87 generates a current as a function of the current command signal S2 and outputs the same to the steering actuator assembly 9 to drive the steering actuator assembly 9. More specifically, the actuator driver 87 controls power to be supplied to coils of the motor 43. For example, the actuator driver 87 comprises a half-bridge circuit using switching elements (not shown) to implement PWM control, in which a voltage applied to the motor is selected through the ON/OFF duty cycle of the switching elements. In this way, changes can be made to the angle of the hub bearing assembly 3 relative to the unit support member 53 to cause a change in the angle of the wheel 13. A toe angle level can also be adjusted as a function of given situations during straight-line driving. In this way, an improvement can be made in the dynamic performance and the fuel economy of the vehicle.

According to a system having such a configuration, the controller 85 generates the current command signal S2 as a function of the steering angle command signal S 1 given from, for example, the superordinate control unit 89, while the actuator driver 87 generates a current as a function of the current command signal S2 that is generated and output from the controller 85, to controllably drive the rolling actuator. Hence, changes can be made to the steering angle of the wheel 13 as desired in a supplementary manner to steering of the same wheel performed through the operation of the steering input 15a by a driver.

In the above-discussed embodiment, a reference has been made to an example in which the steering actuator assembly 9 is mounted to the unit support member 5 of the hub unit 1. According to such a configuration, no sacrifice needs to be made in the rigidity of the unit as a whole. Nevertheless, the steering actuator assembly 9 may be mounted to the suspension system 33, a chassis, etc. of the vehicle 11 for a more efficient use of a space, in situations where there is not an adequate space available around the wheel 13, for example.

In the above-discussed embodiment, a reference has also been made to an example in which the steering actuator assembly 9 is provided for each hub unit 1 on left and right wheels. According to such a configuration, per-wheel, independent steering control of left and right wheels can be performed. Nevertheless, the steering actuator assembly 9 may be shared among two hub units 1 with a steering function, each provided for a respective one of left and right wheels 13 of the vehicle 11, with a view to reducing a parts count and, therefore, lowering the weight and cost of the vehicle 11.

Note that, in the above-discussed embodiment, a reference has been made to an example in which the hub unit 1 is installed to a front wheel 13F serving as a drive wheel, as shown in Fig. 2. Nevertheless, as an alternative or in addition, the hub unit 1 in the instant embodiment may be installed to a driven wheel (which is, in the instant example, a rear wheel 13R.)

As thus far discussed, according to the hub unit 1 in the instant embodiment, the hub bearing assembly 3 that provides support of the wheel 13 is supported in a rotatable manner about the turning axis A that extends in a vertical direction. This allows independent steering of a left or right wheel to be performed as a function of the travelling conditions of the vehicle 11 during driving to thereby improve the dynamic performance of the vehicle 11. On top of that, drive power from a drive source (i.e., an engine or a drive motor) of the vehicle can be transmitted through the driveshaft 53 to thereby further improve the dynamic performance of the vehicle 11. In this way, particularly stable driving can be achieved along with an improved fuel economy.

Moreover, despite a structural complication of the hub unit 1 due to steering control that can be effected at the hub bearing assembly 3 and integration of the driveshaft 53, a successful increase in the rigidity of the unit as a whole is achieved through the mounting of the hub bearing assembly 3 to the unit support member 5 having a high rigidity.

While a description of features that implement the present invention has thus far been made on the basis of embodiments thereof, the embodiments disclosed herein should be understood as non-limiting examples in all respects. The scope of the present invention should be delimited not by the foregoing description but by the appended claims and is intended to encompass any modifications within the meaning and breadth of equivalency of the appended claims.

### (Reference Symbols)

- 1: hub unit with steering function
- 3: hub bearing assembly
- 5: unit support member
- 5b: inboard, mounting surface
- 7: rotation-permitting support member
- 9: steering actuator assembly
- 11: vehicle
- 13: wheel
- 13F: front wheel
- 13R: rear wheel
- 33: suspension system
- 53: driveshaft
- 81: steering system
- 85: controller
- 87: actuator driver
- A: turning axis
- P: joint center

## Claims

1. A hub unit with a steering function, comprising:
a hub bearing assembly including a hub bearing configured to rotatably support a wheel of a vehicle, the hub bearing being configured to be coupled with a driveshaft that transmits drive power from a drive source of the vehicle;
a unit support member configured to be coupled to a suspension system and supporting the hub bearing assembly; and
a rotation-permitting support member rotatably supporting the hub bearing assembly, about a turning axis that extends in a vertical direction, on the unit support member.

2. The hub unit with a steering function as claimed in claim 1, wherein the unit support member has a through hole formed therein to pass the driveshaft therethrough.

3. The hub unit with a steering function as claimed in claim 1 or 2, wherein the unit support member has an inboard, mounting surface, and the hub unit is configured such that a joint center for the driveshaft is positioned on an outboard side with respect to said inboard, mounting surface.

4. The hub unit with a steering function as claimed in any one of claims 1 to 3, further comprising a steering actuator assembly configured to cause rotation of the hub bearing assembly about the turning axis.

5. The hub unit with a steering function as claimed in claim 4, wherein the steering actuator assembly is mounted to the unit support member.

6. The hub unit with a steering function as claimed in claim 4, wherein the steering actuator assembly is configured to be mounted to the suspension system or a chassis of the vehicle.

7. The hub unit with a steering function as claimed in claim 4, wherein the steering actuator assembly is configured to be shared among two hub units with a steering function, each provided for a respective one of left and right wheels of the vehicle.

8. A steering system comprising:
a hub unit with a steering function as claimed in any one of claims 1 to 7; and
a control device configured to control the steering actuator assembly as claimed in claim 4, the control device including a controller configured to generate a current command signal as a function of a given steering angle command signal and an actuator driver configured to generate a current as a function of the current command signal that is generated and output from the controller, to drive the steering actuator assembly.

9. A vehicle comprising a hub unit with a steering function as claimed in any one of claims 1 to 7 or a steering system as claimed in claim 8, the hub unit or the steering system being installed for left and right front wheels and/or left and right rear wheels of the vehicle.
